# EUROPEAN PATENT APPLICATION

(11) **EP 1 987 978 A2**
(43) Date of publication of application: **05.11.2008**
(21) Application number: 08251616.2
(22) Date of filing: 06.05.2008
(51) Int. Cl.: B60K 17/04

(54) **Transmission system for a vehicle**

(30) Priority: 04.05.2007 US 800313
(71) Applicant: Dana Heavy Vehicle Systems Group, LLC, Toledo, OH 43615 (US)
(72) Inventor: De Craemer, Thomas M.M., 8310 Sint-Kruis (BE); Schacht, Filip D., 8800 Roeselare (BE); Versteyhe, Mark R. J., 8020 Oostkamp (BE)
(74) Representative: Cheyne, John Robert Alexander M.

(57) **Abstract**

A transmission system having an input portion (46) connected to an engine (28), an output portion (48) connected to a front propshaft (54) and a rear propshaft (56), and a middle portion (50) connecting the input portion (46) to the output portion (48). The front propshaft (54) and the rear propshaft (56) are substantially co-axial and substantially equal length. The middle portion (50) extends downward and diagonally rearward from the input portion (46) to the output portion (48).

## Description

### FIELD OF THE INVENTION

The present invention relates to a transmission system for a vehicle, such as a teleboom handler.

### BACKGROUND OF THE INVENTION

Teleboom handler vehicles are vehicles of unique design. The operator sits in a cab located off-center and the engine is often also located off-center in order to accommodate the telescoping boom located in the middle of the vehicle. As a result of this arrangement, the connection between the engine and the drive wheels can be unique. Often times, the uniqueness of the connection results in undesirable auxiliary pump locations, propshaft angles and lengths, long wheel bases and expensive, individual parts.

A brief summary of some of the prior art devices are described in the following U.S. patents. U.S. Patent No. 6,152,253 teaches a drive train system for a teleboom handler having a single, central frame member axially aligned with a central axis of the handler. The engine is mounted to one side of the central frame member. The engine is connected to the transmission which is itself linearly mounted along the central axis of the handler. A rear drive shaft and a forward drive shaft extend from the transmission to their respective axles. The drive shafts are of unequal length

U.S. Patent No. 6,105,710 provides for a teleboom handler having a motor and a transmission aligned in tandem with one another along a first axis where the first axis is parallel to and offset from the central axis of the handler. The transmission includes a drop box to provide rotational power to a rear drive shaft and a forward drive shaft. The rear drive shaft and the forward drive shaft extend directly underneath the central frame member of the handler.

European Patent Application No. 1,312,498 depicts and describes a teleboom handler having an engine and transmission in a tandem arrangement that is offset from the centerline of the handler. A drop box is used to connect the transmission to the forward drive shaft and the rear drive shaft. Even though a drop box is used, the output for the forward drive shaft and the output for the rear drive shaft are both offset from the centerline of the vehicle. Thus, the forward drive shaft and the rear drive shaft extend to the forward and rear differentials, respectively, at an angle.

U.S. Patent Application Publication No. 2004/0142784 teaches a side-mounted engine having an inwardly extending output shaft connected to a transmission. The transmission utilizes an inwardly extending output shaft to drive a bevel gear mechanism. The bevel gear mechanism provides drive to the forward drive shaft and the rear drive shaft. The drive shafts are parallel to, but offset from, the vehicle centerline.

### SUMMARY OF THE INVENTION

The present invention is directed toward a transmission system having an input portion, an output portion and a middle portion. The input portion is connected to an engine. The output portion is connected to a front propshaft and a rear propshaft. The propshafts are preferably substantially co-axial and substantially equal length. The middle portion extends downwardly and diagonally rearward from the input portion to the output portion to connect them together.

### BRIEF DESCRIPTION OF THE DRAWINGS

The above, as well as other advantages of the present invention, will become readily apparent to those skilled in the art from the following detailed description when considered in the light of the accompanying drawings in which:
Fig. 1 is a top, schematic view of a vehicle appropriate for the present invention;
Fig. 2 is a bottom view of the vehicle depicted in Fig. 1;
Fig. 3 is a schematic layout of a transmission system of the present invention;
Fig. 4 is a schematic side view of a portion of the transmission system of Fig. 3;
Fig. 5 is a schematic side view of a portion of the transmission system of Fig. 3; and
Fig. 6 is a schematic layout of an alternative embodiment of a transmission system of the present invention.

### DETAILED DESCRIPTION OF THE PREFERRED EMBODIMENTS

It is to be understood that the invention may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions, directions or other physical characteristics relating to the embodiments disclosed are not to be considered as limiting, unless the claims expressly state otherwise.

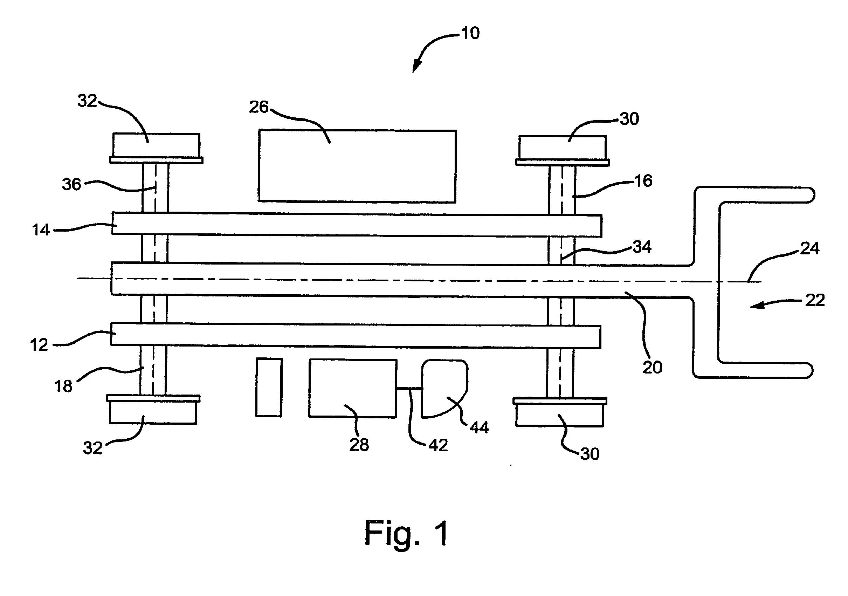

Referring to Fig. 1, a top view of a schematic layout of a vehicle, such as a teleboom handler vehicle 10, is depicted. While the present invention is described herein as applied to a teleboom handler-type vehicle 10, it can be appreciated that the present invention may be equally applicable to any other type of vehicle.

The teleboom handler 10 has a first chassis rail 12 and a second chassis rail 14. The rails 12, 14 are substantially parallel to one another and they extend at least from a front axle housing 16 to a rear axle housing 18. Located substantially between the rails 12, 14 is a telescoping boom 20 fitted with a cargo transporting section 22. In Fig. 1, the cargo transporting section 22 is a fork. It can be appreciated, however, that the cargo transporting section 22 can comprise any structure designed to facilitate the transportation of cargo and/or people.

Preferably, a centerline 24 of the vehicle 10 is located between the first and second chassis rails 12, 14. The boom 20 and its cargo transporting section 22 may be substantially aligned and centered with the centerline 24 of the vehicle 10.

Located outboard one of the chassis rails, the second chassis rail 14 in the depicted embodiment, is a cabin 26 for the operator of the vehicle 10. Located outboard of the other chassis rail, the first chassis rail 12 in the depicted embodiment, is an engine 28, such as an internal combustion engine. While the figure depicts the cabin 26 outboard of the second chassis rail 14 and the engine 28 outboard of the first chassis rail 12, it can be appreciated that location of the engine 28 and the cabin 26 are interchangeable.

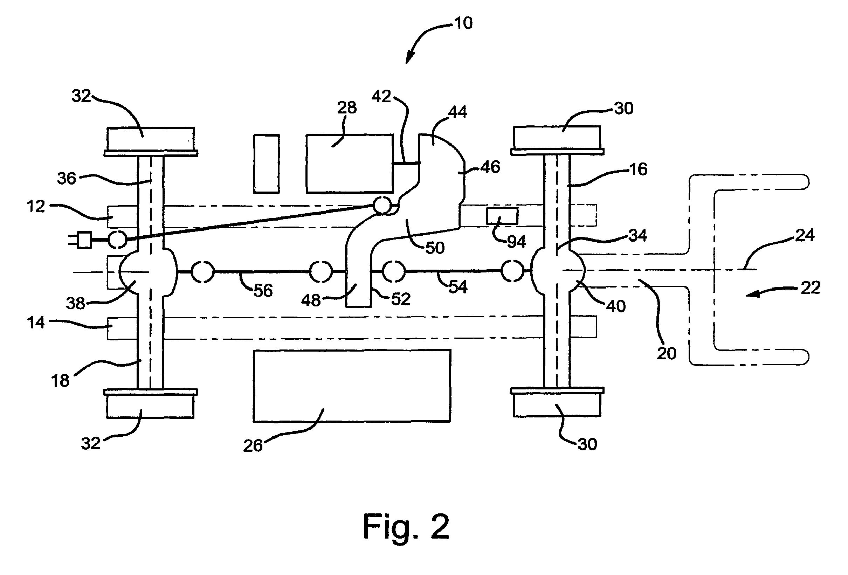

A pair of front wheels 30 are depicted as being adjacent to the front axle housing 16. A pair of rear wheels 32 are depicted as being adjacent to the rear axle housing 18. Tires (not shown) are mounted to each of the wheels 30, 32. The front wheels 30 are connected to a front drive axle 34 located within the front axle housing 16. The rear wheels 32 are connected to a rear drive axle 36 located within the rear axle housing 18. As seen in Fig. 2, the rear drive axle 36 is connected to a rear differential 38 and the front drive axle 34 is connected to a front differential 40. The connection between the engine 28 and the front and rear drive axles 34, 36 will now be explained.

The engine 28 rotates an output shaft 42. With continued reference to Fig. 2, it can be seen that the engine 28 and the output shaft 42 extend substantially parallel with the chassis rails 12, 14. The output shaft 42 extends forward toward the front axle housing 16. The output shaft 42 provides rotational power to a transmission 44.

The transmission 44 of the present invention is preferably comprised of three sections: an input portion 46, an output portion 48 and a middle portion 50 connecting the input portion 46 with the output portion 48. The input portion 46 extends toward the first chassis rail 12 and it is substantially transverse to the engine output shaft 42 and the first chassis rail 12. The middle portion 50 extends downwardly, and preferably at a downward rearward diagonal, toward the rear axle housing 18. The downward diagonal creates an offset between the middle portion 50 and the front axle housing 16. The middle portion 50 terminates substantially beneath the first chassis rail 12.

The middle portion 50 connects to the output portion 48 which is oriented substantially transverse to the centerline 24 of the vehicle 10. As will be appreciated from the information below, the input portion 46 transfers rotational power from the engine 28 to the middle portion 50 and the middle portion 50 transfers rotational power to the output portion 48. It is preferred that the input portion 46, the middle portion 50 and the output portion 48 are located within the same housing 52.

A forward propshaft 54 extends from the output portion 48 of the transmission 44 forward toward the front differential 40 of the front axle housing 16. The forward propshaft 54 connects the output portion 48 of the transmission 44 with the front differential 40 to provide rotational power to the front differential 40. A rear propshaft 56 extends from the output portion 48 of the transmission 44 rearwardly toward the rear differential 38 of the rear axle housing 18. The rear propshaft 56 connects the output portion 48 of the transmission 44 with the rear differential 38 to provide rotational power to the rear differential 38. Based on the above, a power path from the engine 28 to each of the wheels 30, 32 has been described.

Preferably, the output portion 48 of the transmission 44 is located substantially equidistant from the front axle housing 16 to the rear axle housing 18. Thus, the forward propshaft 54 and the rear propshaft 56 are substantially the same length. It is also preferred that the forward propshaft 54 and the rear propshaft 56 be substantially co-axial with one another and substantially parallel with the chassis rails 12, 14 and the longitudinal centerline 24 of the vehicle 10. Substantially co-axial propshafts 54, 56 minimize misalignment of the shafts 54, 56 between the output portion 48 and the front and rear differentials 38, 40.

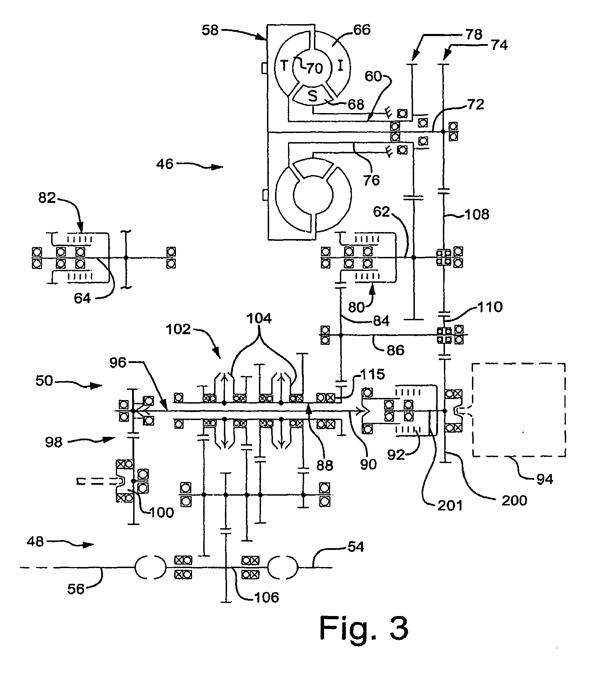

As best seen in Fig. 3, the input portion 46 comprises a torque converter 58, two concentric shafts 60, a forward clutch shaft 62 and a reverse clutch shaft 64. The torque converter 58 comprises a turbine 70, a stator 68 and an impeller 66. An inner shaft 72 of the concentric shafts 60 is connected to the impeller 66 at one end and to a pump drive train 74 at the other end. An outer shaft 76 of the concentric shafts 60 has one end connected to the turbine 70 and the other end connected to a transmission drive train 78. Those skilled in the art appreciate that the turbine 70 is driven by the engine 28 and that the stator 68 is grounded.

The transmission drive train 78 comprises a forward clutch 80 and a reverse clutch 82. Rotational power is provided to the forward clutch 80 by the forward clutch shaft 62, which is connected to the outer shaft 76 of the concentric shafts 60. Rotational power is provided to the reverse clutch 82 by the reverse clutch shaft 64, which is connected to the forward clutch shaft 62. The reverse clutch shaft 64 and the reverse clutch 82 are shown separated from the transmission gear train 78 for clarity in Fig. 3. Preferably, both the forward clutch 80 and the reverse clutch 82 are located beside and extend toward the torque converter 58. This arrangement can be appreciated based the forward and reverse clutch shafts 62, 64 being oriented parallel to the inner shaft 72 as shown in Fig. 3.

By locating the clutches 80, 82 beside the torque converter 58, it permits the input portion 46 of the transmission 44 to extend inwardly toward the longitudinal centerline 24 of the vehicle 10 and the middle portion 50 to extend rearwardly and downwardly toward the rear differential 38. It can be appreciated that this arrangement of the torque converter 58 and the clutches 80, 82 does not appreciably contribute to the transmission 44 extending toward the front axle housing 16.

An idler gear 84 on an idler shaft 86 connects the forward clutch shaft 62 and the reverse clutch shaft 64 with a gear shaft 88. On the gear shaft 88 there are located a plurality of speed gears 102. In the depicted embodiment, four speed gears are shown. It should be appreciated, however, that any number of speed gears may be used without departing from the scope of the present invention.

Intermediate each of the speed gears 102 is a synchronizer 104 for synchronizing a selected gear with either the forward or the reverse clutch 80, 82. Since there are four speed gears in this embodiment, two synchronizers 104 are utilized. The speed gears can be connected to an output shaft 106 located in the output portion 48 of the transmission 44. The output shaft 106 is connected to the front propshaft 54 and the rear propshaft 56, both of which are described above.

In the preferred embodiment, the four speed gears are relatively small since synchronizers 104 are utilized. Four speed gears that are relatively small combined with just the friction discs in the clutches 80, 82 has the advantage of requiring low driver effort to effect gear shifts.

The pump drive train 74 comprises a plurality of gears that connect the inner shaft 72 of the concentric shafts 60 with the auxiliary pump output shaft 201 via a-two-piece gear shaft 90. One piece of this gear shaft 90 is the auxiliary pump output shaft 201, the other part is a power-take-off-shaft 96. Rotational power is provided to the power-take-off-shaft 96 by the power-take-off-clutch 92 which is connected to the auxiliary pump output shaft 201.

The other end of the power-take-off-shaft 96 is connected to a gear set 98. The gear set 98 reduces the rpms of the power-take-off-shaft 96 to rotate an output shaft 100 at a standard power-take-off output rpm. The output shaft 100 exits the transmission 44 near the centerline 24 of the vehicle 10 resulting in a power-take-off propshaft (not shown) substantially aligned with the centerline 24 of the vehicle 10.

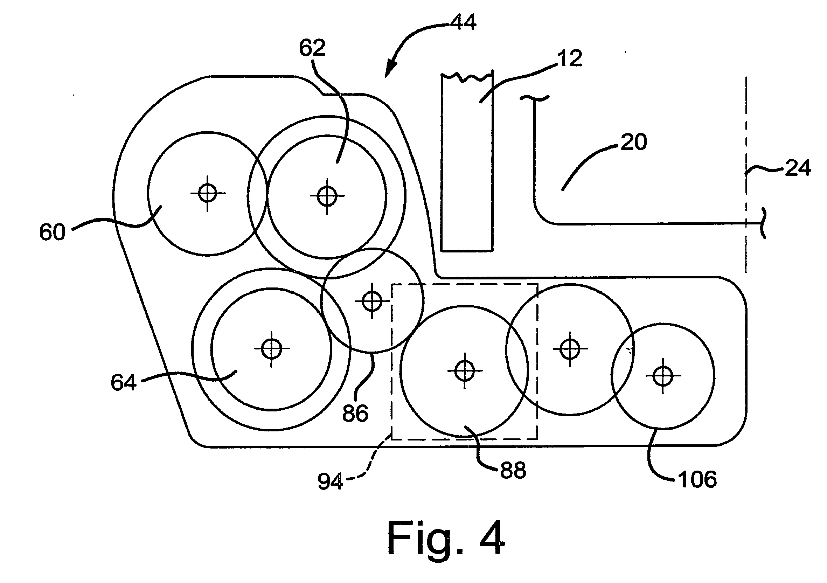

In the depicted embodiment of the invention in Fig. 3, the inner shaft 72 drives a first gear 108 idling on the forward clutch shaft 62 which in turn drives a second gear 110 on the idler shaft 86. This gear is connected to the auxiliary pump gear 200 on the above-described auxiliary pump output shaft 201. As depicted in Figs. 2 and 4, the pump 94 is preferably located substantially beneath one of the two longitudinal chassis beams 12 or 14 of the vehicle 10 and away from the front wheels 30 of the vehicle 10. It can be appreciated based on the description of the location of the pump 94 and two-piece gear shaft 90 that the pump 94 can be almost any length since it will not interfere with the beams 12 or 14 or the front wheels 30.

The input portion 46, the middle portion 50 and the output portion 48 of the transmission 44 utilize a first lubricant sump 112 and second lubricant sump 113 for the transmission 44. The sumps 112, 113 are divided from one another by a seal 115. The seal is schematically depicted in Fig. 3. The input portion 46 is force lubricated via sump 112, the middle portion 50 is both force lubricated by sump 112 and/or splash lubricated via sump 113 and the output portion 48 is solely splash lubricated by sump 113 or force lubricated by the first lubricant sump 112.

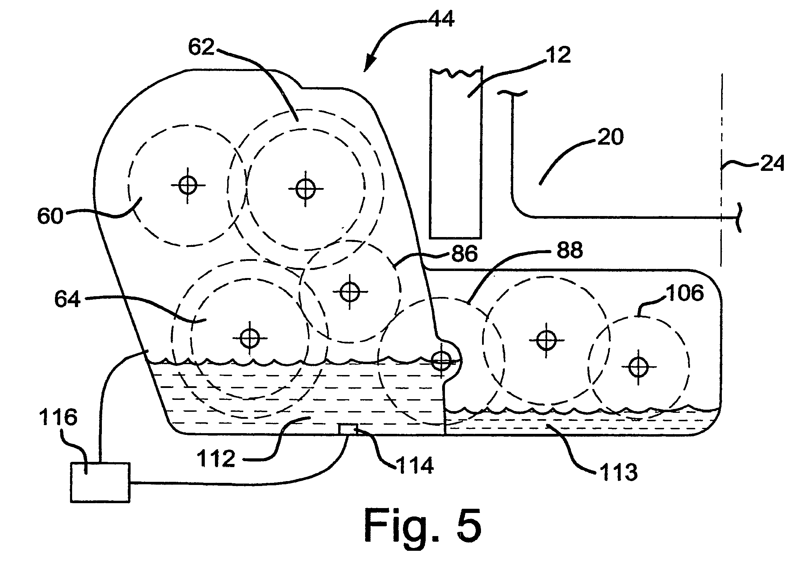

As best seen in Fig. 5, the concentric shafts 60, the forward and reverse clutch shafts 62, 64 and the idler shaft 86 are lubricated by drawing lubricant through a suction port 114 by a lubrication pump 116. The auxiliary pump output shaft 201 is exposed to force lubrication. The power-take-off-shaft 96 is lubricated by splashed lubricant on the side of the output shaft 100 and force lubricated on the side of the auxiliary pump 94.

Based on the foregoing, it can be appreciated that a transmission 44 housed as a single unit has been described which minimizes propshaft angles 54, 56, equalizes propshaft 54, 56 lengths and which permits the wheel base of the vehicle 10 to be minimized since additional longitudinal distance is not required to accommodate the transmission 44.

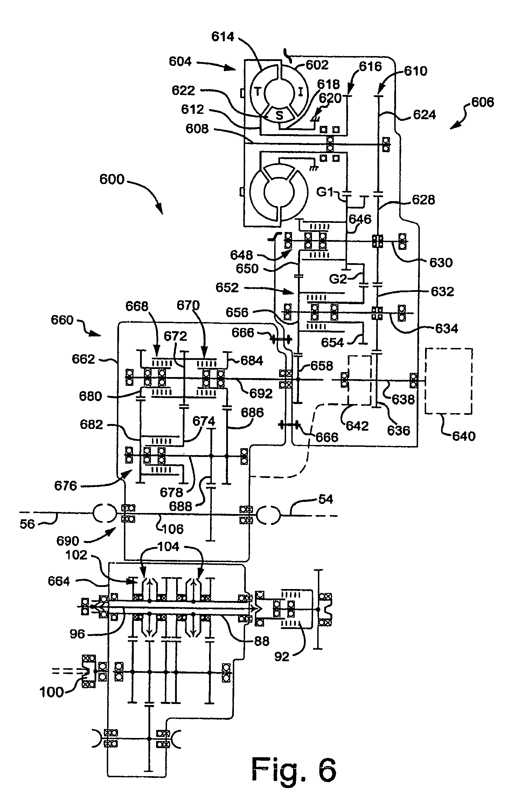

Referring now to Fig. 6, an alternative embodiment for a transmission system 600 is depicted. The engine is connected to an impeller 602 of a torque converter 604. The torque converter 604, as well as the following items, comprise an input portion 606. The input portion 606 has many of the features and characteristics of the input portion 46 described above.

As can be seen from Fig. 6, a shaft 608 connects the impeller 602 with a pump drive train 610. Another shaft 612 connects a turbine 614 of the torque converter 604 to a transmission drive train 616. Yet another shaft 618 connects a transmission housing 620 and a stator 622 of the torque converter 604.

The pump drive train 610 may be comprised of four gears. A first gear 624 is situated on shaft 608 and it is fixed to the impeller 602. A second gear 628 is idling over shaft 630 and is driven by shaft 608. Torque is transmitted through the second gear 628 to a third gear 632. The third gear 632 is situated on shaft 634. The third gear 632 is driven by gear 628. The third gear 632 transmits torque to a gear 636 on shaft 638.

An auxiliary pump 640 is driven by shaft 638. A scavenger pump 642 is also driven by shaft 638.

The input portion 606 also comprises the transmission drive train 616. The transmission drive train 616 receives its torque from the turbine 614 of the torque converter 604. The turbine 614 is connected to shaft 612.

Shaft 612 transmits torque from the turbine 614 to a drum gear 646 of a forward low clutch 648 situated on shaft 630. As can be appreciated from Fig. 6, the drum gear 646 of the forward low clutch 648 comprises 2 gears. Namely, a first gear, which makes the connection to the shaft 612, named G1, and a second gear, named G2.

The drum gear 646 of the forward low clutch 648 connects (1) the turbine 614 with a drum gear of a reverse clutch situated on a shaft (none of which are shown in Fig. 6) via G1 and (2) the turbine 614 with a hub gear 654 of a forward high clutch 652 situated on shaft 634 via G2.

When the forward low clutch 648 is closed, torque is transmitted through the clutch 648 to a hub gear 650 of the forward low clutch 648, which is connected to a drum gear 656 of the forward high clutch 652. As mentioned above, the reverse clutch is located on a shaft. The drum gear of the reverse clutch receives torque from shaft 612 via the drum gear 646 of the forward low clutch 648. When the reverse direction is selected, the reverse clutch will close and transmit the torque through the clutch via the hub gear to the drum gear 656 of the forward high clutch 652 situated on shaft 634.

The forward high clutch 652 is situated on shaft 634. It can be appreciated that the drum gear 656 of the forward high clutch 652 receives power from the hub gear 650 of the forward low clutch 648, or the hub gear of the reverse clutch. Those skilled in the art may appreciate that the forward high clutch 652 may be eliminated as long as the drum gear 656 of the forward high clutch 652 remains.

If the forward high clutch 652 is closed, torque will be transmitted from the hub gear 654 of the forward high clutch 652, which is connected to the drum gear 646 of the forward low clutch 648, via the clutch to the drum gear 656 of the forward high clutch 652. In this case, the hub gear 650 of both the forward low clutch 648 and the reverse clutch are idling. In any case, the drum gear 656 of the forward high clutch 652 transmits the torque to the gear 658 situated on shaft 692.

A gear 658 is provided on shaft 692. The gear 658 functions as the input gear for the middle portion 660.

As can be appreciated from Fig. 6, the middle portion 660 has two modules that are interchangeable. While two middle modules are disclosed herein, it should be appreciated that the present invention is not limited to only these two modules.

The first module comprises a power shift module 662. The second module comprises a power synchronization module 664. The power synchronization middle portion module 664 has been disclosed and discussed above, thus the same reference numbers are applied. The power synchronization middle portion module 664 is depicted below the power shift module 662 in Fig. 6.

The power shift middle portion module 662 is depicted as connected to the input portion 606 in Fig. 6. The connection may be made by mechanical fasteners, such as bolts 666. As provided above, torque is transmitted to gear 658 on shaft 692. Also located on shaft 692, but in the power shift middle portion module 662, there is located at least one clutch. Preferably, there are located 2 clutches 668, 670. Both clutches 668, 670 share the same drum gear 672, which is fixed to shaft 692. This drum gear 672 transmits the torque coming from shaft 692 to a hub gear 674 of a third clutch 676 on shaft 678.

If the first clutch 668 is closed, torque will be transmitted from the shaft 692 via a hub gear 680 of the first clutch 668 to the drum gear 682 of the third clutch 676 situated on shaft 678. If the second clutch 670 is closed, torque will be transmitted from the shaft 692 via the hub gear 684 of the second clutch 670 to a first gear 686 located on shaft 678.

A second gear 688 may be located on shaft 678 between the hub gear 674 of the third clutch 676 and the first gear 686. The second gear 688 connects the middle portion 660 with an output portion 690. The output portion 690 may be substantially identical to the output portion 48 described above, thus the same reference numbers are used.

The power shift middle portion 662 is connected to the scavenger pump 642 via a suction line, as shown in Fig. 6. The power shift middle portion 662 may be lubricated, such as, through force lubrication.

In accordance with the provisions of the patent statutes, the present invention has been described in what is considered to represent its preferred embodiments. However, it should be noted that the invention can be practiced otherwise than as specifically illustrated and described without departing from its spirit or scope.

## Claims

1. A transmission system, comprising:
an input portion connected to an engine;
an output portion connected to a front propshaft and a rear propshaft, said propshafts being substantially co-axial and substantially equal length; and
a middle portion extending downward and diagonally rearward from said input portion to said output portion to connect them together.

2. The transmission system of claim 1, wherein said output portion is located substantially equidistant from a front differential and a rear differential.

3. The transmission system of claim 1, wherein said engine is offset from but oriented substantially parallel with said propshafts.

4. The transmission system of claim 1, wherein said input portion has a torque converter and a forward clutch and a reverse clutch, said clutches being located beside and extending toward said torque converter to permit said input portion to extend inwardly toward a longitudinal centerline of a vehicle supporting the foregoing and to permit said middle portion to extend rearwardly toward said rear differential.

5. The transmission system of claim 1, wherein said input portion, said middle portion and said output portion utilize a first sump and a second sump, said input portion being force lubricated by said first sump, said middle portion being force lubricated by said first sump and/or splash lubricated by said second sump and said output portion being splash lubricated by said second sump or force lubricated by said first sump.

6. The transmission system of claim 1, wherein an auxiliary pump is connected to said middle portion, said pump being located substantially beneath one of two longitudinal chassis rails of said vehicle that substantially extend from a front axle housing of said vehicle to a rear axle housing of said vehicle.

7. The transmission system of claim 1, wherein said input portion, said middle portion and said output portion are located within the same housing.

8. The transmission system of claim 1, wherein said middle portion has an output shaft for a power take-off.

9. A working vehicle, comprising:
a first chassis rail and a second chassis rail of a vehicle that both extend substantially parallel to one another substantially from a forward axle to a rear axle;
an engine aligned and mounted substantially parallel with said two chassis rails, said engine being located substantially outboard of said second chassis rail, said engine having an output shaft that extends toward said forward axle housing and that is substantially parallel with said second chassis rail;
a transmission comprising an input portion, an output portion and a middle portion connecting said input portion with said output portion, said input portion extending substantially transversely to said engine output shaft, said middle portion extending in a substantially downward, rearward diagonal direction to said output portion that is located substantially transversely to said chassis rails; and
a forward propshaft and a rear propshaft coupling said output portion of said transmission with said forward axle and said rear axle, respectively, said shafts extending substantially parallel with said chassis rails due to the substantial transverse nature of the output portion of the transmission.

10. The working vehicle of claim 9, wherein said forward propshaft and said rear propshaft are substantially co-axial and substantially equal length.

11. A transmission for a vehicle, comprising:
an input portion having two concentric shafts for driving a pump drive train and a transmission drive train, said input portion being force lubricated;
an output portion driving a forward propshaft and a rear propshaft, said output portion being splash lubricated or force lubricated; and
a middle portion connecting said input portion to said output portion, said middle portion having a plurality of speed gears and being force lubricated and/or splash lubricated;
wherein said input portion, said middle portion and said output portion are lubricated by two sumps.

12. The transmission of claim 11, wherein said input portion, said middle portion and said output portion utilize a first sump and a second sump, said input portion being force lubricated by said first sump, said middle portion being force lubricated by said first sump and/or splash lubricated by said second sump and said output portion being splash lubricated by said second sump force lubricated by said first sump.

13. The transmission of claim 11, wherein said input portion is connected to an engine, said output portion is connected to a front propshaft and a rear propshaft, said propshafts being substantially co-axial and substantially equal length, said middle portion extending downward and diagonally rearward from said input portion to said output portion to connect them together and to create an offset between said middle portion aid said front axle housing.

14. A transmission system, comprising:
an input portion connected to an engine;
an output portion connected to a front propshaft and a rear propshaft, said propshafts being substantially co-axial and substantially equal length; and
a middle portion extending downward and diagonally rearward from said input portion to said output portion to connect them together;
wherein said middle portion comprises a first module or a second module, either of which can be interchangeably connected to said input portion and said output portion, said first module comprising a power shift module and said second module comprising a power synchronization module.

15. The system of claim 14, wherein said power shift module comprises a plurality of clutches.

16. The system of claim 15, wherein torque is transferred from said input portion to said middle portion via a gear on a shaft, said gear being connected to a drum gear of a forward high clutch of said input portion

17. The system of claim 16, wherein two clutches in said middle portion are connected to said shaft, said clutches sharing the same drum gear.

18. The system of claim 17, where said shared drum gear is connected to a hub gear of a third clutch for transmitting torque thereto.

19. The system of claim 14, wherein said power synchronization module comprises one or more speed gears and one or more synchronizers.

20. The system of claim 19, wherein said speed gears are connected to an output shaft of said output portion and said output shaft is connected to said front propshaft and said rear propshaft.
